(19) Europäisches Patentamt
European Patent Office
Office européen des brevets

(11) **EP 2 961 118 B1**

(12) **EUROPEAN PATENT SPECIFICATION**

(45) Date of publication and mention
of the grant of the patent:
**21.11.2018 Bulletin 2018/47**

(51) Int Cl.:
*H04L 25/02* *(2006.01)*     *H04L 25/03* *(2006.01)*

(21) Application number: **14306035.8**

(22) Date of filing: **27.06.2014**

(54) **Method for channel estimation and equalization**

Verfahren zur Kanalschätzung und -entzerrung

Procédé d'estimation et d'égalisation de canal

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.12.2015 Bulletin 2015/53**

(73) Proprietor: **Alcatel Lucent
91620 Nozay (FR)**

(72) Inventors:
• **Gacanin, Haris
2018 Antwerpen (BE)**
• **Ramirez Gutierrez, Raymundo
2018 Antwerpen (BE)**

(74) Representative: **Nokia EPO representatives
Nokia Technologies Oy
Karaportti 3
02610 Espoo (FI)**

(56) References cited:
**EP-A2- 1 901 505      US-A1- 2007 147 489
US-A1- 2014 079 110**

• **JOSEP SOLER-GARRIDO ET AL:
"Implementation and evaluation of a
high-performance MIMO detector for wireless
LAN systems", IEEE TRANSACTIONS ON
CONSUMER ELECTRONICS, IEEE SERVICE
CENTER, NEW YORK, NY, US, vol. 57, no. 4, 1
November 2011 (2011-11-01), pages 1519-1527,
XP011398425, ISSN: 0098-3063, DOI:
10.1109/TCE.2011.6131120**

**Description**

**Field of Invention**

The field of the invention relates to channel estimation and equalization. Particular embodiments relate to the field of wired communication, in particular equalization on the receiver side. More in particular, embodiments of the invention relate to methods, receivers, computer program products, digital data storage media and wired communication systems suited for power line communication.

**Background**

Power Line Communication (PLC) has enabled convenient networking functions to mains-powered devices without any additional cable infrastructure. Multiple Input multiple output (MIMO) techniques have been used for wireless communication to improve and increase the performance and reliability of the system. Generally speaking, there are two types of MIMO: a diversity technique where the "same" symbols are sent from a transmitter and, a multiplexing technique where different symbols are sent from the transmitters. Spatial multiplexing schemes are very attractive due to much higher capacity, but they have a problem with complex precoding/decoding and equalization that is used to reduce or avoid interference among different data streams. One example of spatial multiplexing in wireless communications is VBLAST invented by Bell Labs. Two multiplexing MIMO-PLC schemes are known: a scheme with channel state information (CSI) at transmitter wherein singular value decomposition (SVD) is used to compute pre-coding/decoding vectors prior to transmission to orthogonalize the channels between the transmitter and receiver end; and a scheme without CSI at transmitter wherein the transmit symbol vector is estimated by different equalizers such as zero forcing (ZF) or minimum mean square error (MMSE) equalizing.

A technique called lattice reduction (LR) is introduced in MIMO linear equalization to improve the performance of the conventional equalizers as ZF or MMSE to achieve a performance closer to the maximum likelihood (ML) detector but with much lower complexity. The idea behind LR is to improve the estimation of the received signal $y$. Conventionally, one tries to find the nearest point to $y$ on the lattice spanned by the channel matrix $H$. Based on that idea, when $H$ is orthogonal, the estimation of linear equalizers is the same as a maximum likelihood detector. However, in general the MIMO channel $H$ is not orthogonal which results in performance degradation.

To detect symbols in MIMO-PLC multiplexing schemes (without CSI at the transmitter) linear (ZF or MMSE) and complex lattice equalizers can be used to reduce the interference between different streams. If a complex lattice equalizer is used the computational complexity is high since each time the data is transmitted the equalizer (combination of ZF (or MMSE) and Lattice reduction (diagonalization) algorithm) has to be calculated. This may not be practically feasible. Each time data is transmitted, the equalizer processing is initiated which causes an expensive computational complexity.

US 2014/0079110 describes an efficient equalizer coefficient computation method and system. US2007/0147489 describes an uplink burst equalizing method in broad wide access system. EP1901505 describes a wireless communication apparatus applying a lattice reduction transformation.

**Summary**

The scope of the invention is defined by the claims.

Embodiments of the invention aim to enhance the practical feasibility of use of equalizers, especially when using lattice reduction, in particular in impulsive noise environments as found in power line communication systems. More in particular, embodiments of the invention aim to realize a suitable equalization for use in a data path at the receiver side of a wired communication while keeping the effort of determining such equalization low.

According to a first aspect of the invention there is provided a method for determining an equalizer for use in a data path at a receiver side of a wired communication during a time period. The method comprising the steps of: determining channel conditions of the wired communication during the time period; determining whether the determined channel conditions have changed compared to channel conditions during a previous time period; making a selection between at least a first and a second determination method to determine an equalizer based on the determined change of the channel conditions; and determining the equalizer based on the selected method.

Embodiments of the invention are based *inter alia* on the insight that the effort of determining an updated equalizer, especially when using lattice reduction, for use in a data path at the receiver side of a wired communication in view of a change in channel conditions, is preferably balanced with the amount of change in such channel conditions, especially if one takes into account the characteristics of the wired communication, such as in power line communications.

According to a an embodiment the selecting comprises: selecting the first determination method if the change of the channel conditions compared with the previous time period is below a first threshold; and selecting the second determination method if the change is above the first threshold.

The determining of the equalizer comprises selecting an equalizer from one or more stored equalizers determined previously, if the first method is selected; and computing an equalizer based on the determined channel conditions, if the second method is selected.

According to a preferred embodiment, if the second determination method is selected, the method further comprises selecting a first computation method, if the change of the channel conditions compared with this previous time period is below a second threshold, and selecting a second equalizer computation method, if the change of the channel conditions is above the second threshold. The second computation method comprises computing a channel estimate based on a received signal, and performing a lattice reduction algorithm on said channel estimate; and the first computation method comprises computing a channel estimate based on a received signal without performing a lattice reduction algorithm. This embodiment is based on the insight that, even when the change of the channel conditions require a determining of a new equalizer, in many circumstances, especially for the wired communication considered, only a partial re-computing is necessary to obtain a good equalizer, which again contributes to the aim of the invention as described above.

According to a preferred embodiment computing said channel estimate comprises performing any one of more of the following computations: performing a FFT, performing clipping, performing matrix diagonalization. Embodiments of the invention are based *inter alia* on the insight that especially for environments with unpredictable power line impulsive noise environment, like power line communication, prior to equalization and lattice diagonalization, the impulsive noise is preferably at least partially removed.

In an exemplary embodiment the two functions of equalizer processing and determining the MIMO channel are differently designed. In an embodiment recalculation of the entire transformation matrix (and equalizer) is avoided when possible.

According to a preferred embodiment the determining of the equalizer is performed by obtaining one or more stored equalizer determined during a previous time period, if the change of the channel conditions compared with the corresponding previous time period is below a first threshold; or by computing at least partially the equalizer based on the determined channel conditions, if the change of the channel conditions compared with the corresponding previous time period is above a first threshold. According to a further developed embodiment if the change of the channel conditions compared with this previous time period is below a second threshold the equalizer is partially computed based on the determined channel conditions or otherwise entirely computed based on the determined channel conditions.

According to yet another aspect of the invention there is provided a method for determining data from signals received at the receiver of a wired communication, comprising the steps of: determining an equalizer in accordance with the first aspect of the invention; and use of the determined equalizer on the received signals.

According to a further developed embodiment the equalizer is used without further descrambling the equalized received signals.

According to a further developed embodiment the equalizer is used with further descrambling the equalized received signals.

According to a further aspect of the invention there is provided a computer program product comprising computer-executable instructions for performing the method of the first or second aspect of the invention when the program is run on a computer.

According to a further aspect of the invention there is provided a digital data storage medium encoding a machine-executable program of instructions to perform any one of the steps of the method of any one of the first or second aspect of the invention.

According to a further aspect of the invention there is provided a receiver for wired communication comprising a processing engine for executing any of the computations of any one of the steps of the method of the first or second aspect of the invention.

According to an aspect of the invention there is provided a receiver for use in a data path at a receiver side of a wired communication. The receiver comprises a channel conditions determining module configured for determining channel conditions of the wired communication during a time period; a comparator configured for determining whether the determined channel conditions have changed compared to channel conditions during a previous time period; a switching module configured for making a selection between at least a first and a second determination method to determine an equalizer based on the determined change of the channel conditions; and an equalizer determining module configured for performing the first or second determination method in accordance with a position of the switching module.

In a preferred embodiment the switching module is configured for selecting the first determination method if the change of the channel conditions compared with the previous time period is below a first threshold; and for selecting the second determination method if the change is above the first threshold. The equalizer determining module is configured for selecting an equalizer from one or more stored equalizers determined previously if the first method is selected; and for computing an equalizer based on the determined channel conditions, if the second method is selected.

A further developed embodiment of the invention comprises a computation selection module configured to select, if the second determination method is selected, a first computation method, if the change of the channel conditions compared with the previous time period is below a second threshold, and to select a second equalizer computation method, if the change of the channel conditions is above the second threshold; wherein the second computation method comprises computing a channel estimate based on a received signal, and performing a lattice reduction algorithm on said channel estimate; and wherein the first computation method comprises computing a channel estimate based on a received signal without performing a lattice reduction algorithm.

According to a further aspect of the invention there is provided a system for power line communication comprising a receiver as in the previous aspect of the invention.

## Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figure 1 illustrates schematically a block diagram of an exemplary embodiment of an equalizer determination method.

Figure 2 is a graph plotting the bit error rate (BER) in function of the signal-to-noise ration (SNR), comparing the theoretical optimal performance for a solution not using lattice reduction (due to its complexity) and the use of lattice reduction in accordance with an exemplary embodiment of the method.

Figure 3 shows a flow chart in accordance with the invention.

## Description of embodiments

In an embodiment of the invention the multiplexing MIMO-PLC performance is improved by keeping the linear ZF or MMSE equalizer (thereby eliminating complex lattice equalizers) and introducing a more efficient pre-processing during the channel estimation (CE) mode. In a further embodiment thereof this approach is used in multiplexing multi-antenna PLC without knowledge of CSI at the transmitter.

The input to the linear equalizer is a pre-processed MIMO channel matrix by lattice reduction to reduce the impact of non-diagonal elements prior to the equalization (the channel updates will be necessary only during the pilot mode which is independent of the data mode). The iterative algorithm is considered to update the lattice transform matrix in order to allow efficient tracking of the channel variations, but only when significant channel variations occur, contrary to state of the art methods where, if the channel changes are not significant, also the entire transformation matrix (and equalizer) needs to be re-calculated.

In an embodiment of the invention linear ZF or MMSE equalizing is used in combination with pre-processing during the channel estimation (CE) mode, enabling determining whether the channel variations require computation of a new equalizer or not, and if so, whether this should be a complete recomputation or a partial one. This embodiment shows to be efficient when lattice reduction is to reduce the impact of non-diagonal elements prior to the equalization

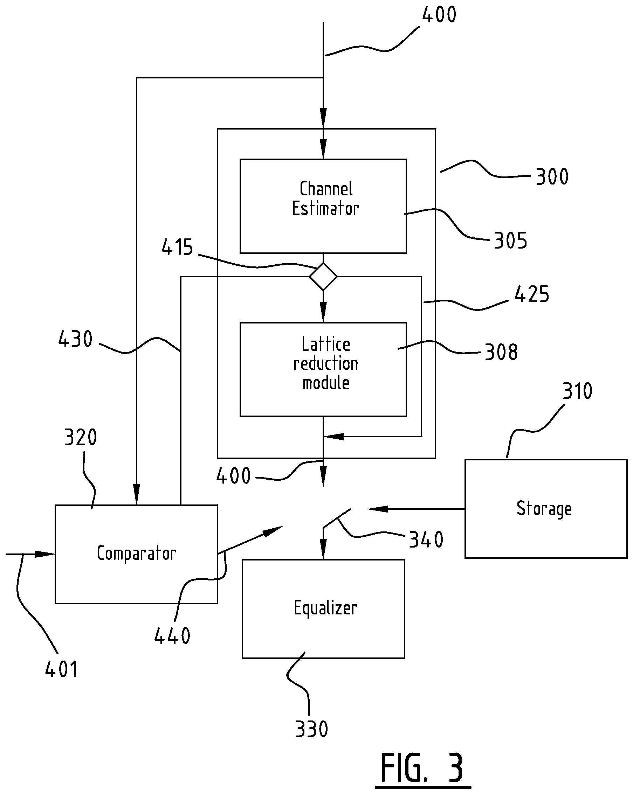

Figure 3 illustrates an embodiment of a generic receiver in which a method for determining an equalizer 330 is used, for use in a data path at the receiver side of a wired communication during a time period. The method comprises determining channel conditions 400 of the wired communication during the time period. In a second step the equalizer is determined with a method selected by using the change of the channel conditions 400 compared with a previous time period. The channel conditions 400 are used as input for the method. By either using the channel conditions 400 or any intermediate result obtained while performing steps toward determining the related equalizer 330, it can be decided to either continue the method of determining the related equalizer, or to use the equalizer as present in the equalizer block 330 or to obtain another equalizer stored in storage means 310. A comparator block 320 is configured to provide a signal 430 to stop equalizer determination 300, and a signal 440 to control a switch 340 in order to use the right equalizer, said signals 430, 440 being determined in function of the change of the channel conditions between the current time period and a previous time period. In that way unnecessary computationally expensive method steps of determining a new equalizer can be avoided. The block 330 for determining the equalizer 300 may for instance comprise a sub-block 305 performing frequency to time domain conversions or vice versa and/or clipping and/or diagonalization, while sub-block 308 may comprise the computation expensive method of lattice reduction. Any other decomposition of the above mentioned operations may be used also.

The receiver of figure 3 comprises a channel conditions determining module (not shown) configured for determining channel conditions 400 of the wired communication during a time period; a comparator 320 configured for determining whether the determined channel conditions 400 have changed compared to channel conditions 401 during a previous time period; a switching module 340 configured for making a selection between a first and a second determination method to determine an equalizer based on the determined change of the channel conditions; and an equalizer determining module 300, 310 configured for performing the first or second determination method in accordance with a position of the switching module 340. The switching module is configured for selecting the first determination method 310 if the change of the channel conditions compared with the previous time period is below a first threshold; and selecting the second determination method 300 if the change is above the first threshold; and the equalizer determining module 310 is configured for selecting an equalizer from one or more stored equalizers determined previously if the first method is selected; and for computing an equalizer 300 based on the determined channel conditions, if the second method is selected. The receiver further comprises a computation selection module 425 configured to select, if the second determination method is selected (switch 340 in the vertical position), a first computation method 305, if the change of the channel conditions compared with the previous time period is below a second threshold, and to selecting a second equalizer computation method 305, 308, if the change of the channel conditions is above the second threshold. The second computation method comprises computing a channel estimate based on a received signal (block 305), and performing a lattice reduction algorithm on said channel estimate (block 308); and the first computation method comprises computing a channel estimate based on a received signal (305) without performing the lattice reduction algorithm, see arrow 425.

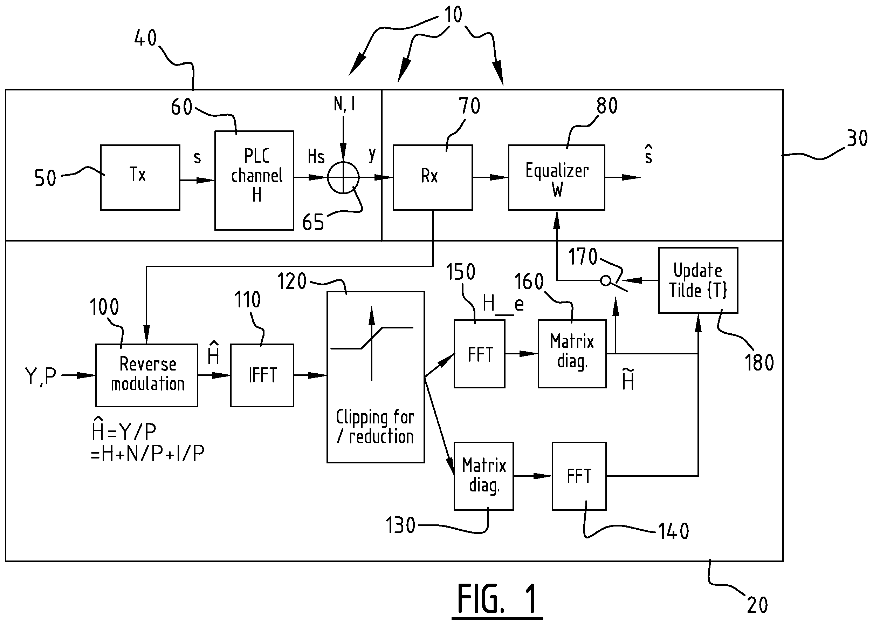

A more detailed exemplary embodiment of the invention is now discussed with reference to figure 1. Figure 1 illustrates the MIMO-PLC receiver model with improved channel estimation. Here we will only focus on the receiver mathematical signal representation since we consider the MIMO-PLC without knowledge of CSI at the transmitter. The received signal for a MIMO system at one time slot from *Nr* receivers can be expressed as:

$$y = Hs + N + I$$

where $H$ is the MIMO-PLC channel matrix with zero mean and unit variance, $N$ is the white Gaussian noise and $I$ is the impulse noise. During the data mode the symbol $s$ is estimated by a linear (ZF or MMSE) channel equalizer. The inputs to the equalizer are Y and the pre-processed MIMO channel matrix $\tilde{H}$.

Figure 1 illustrates the proposed estimation method with diagonalization of the channel matrix during the channel estimation mode. This method only computes the MIMO channel matrix $\tilde{H}$ during the pilot mode and the equalization is always performed by using $\tilde{H}$. The procedure is described in the following steps:

**Step 1:** The input of the channel estimator is the received signal $Y$ during the estimation mode with a known pilot symbol. To estimate the channel and noise the reverse modulation (RM) 100 is done to get the first channel estimate $\hat{H}$ in the frequency domain.

**Step 2 (optional):** The first channel estimate $\hat{H}$ is transformed into the time domain channel impulse response by using the IFFT 110. The estimated channel impulse response matrix $\hat{h}$ is passed through a filter 120 to zero-pad beyond the guard interval length. Then, FFT 150 is used to obtain the frequency-domain estimate of the MIMO channel $H_e$.

Step 3: The orthogonality of the channel matrix $H_e$ is improved by using a lattice reduction 160 in order to reduce the impact of non-diagonal (interference) elements in the channel matrix. Applying a lattice reduction method to $H_e$ results in the improved channel matrix $\tilde{H}$ which is given as

$$\tilde{H} = H_e T,$$

where $T$ is a unimodular matrix with the characteristics that all of its entries are Gaussian integers and its determinant is $\pm 1$ or $+i$.

**Step 4:** $\tilde{H}$ is used as the input to a linear equalizer 80 to obtain an equalization weight $W$. Equalization is done by calculating the estimate of y:

$$\hat{y} = Wy = T^{-1}H^{-1}(Hs + N + I) = T^{-1}s + T^{-1}H^{-1}(N + I).$$

Now each time the data is transmitted, the equalizer is using the same diagonalized MIMO channel matrix (as long as it does not change). In a straightforward approach each time the value of H (and consequently $\tilde{H}$) changes, the

lattice reduction algorithm is initiated (on a per block basis prior to equalization). In accordance with embodiments of the invention however, and especially in accordance with the present embodiment, prior to equalization the estimated value of $\mathbf{H_e}$ is compared with the previous (stored) value and if there are changes the switch 170 in Figure 1 is set to the upper position. On the other hand, if there are no changes the switch 170 is in the lower position.

Note that in the case of large channel changes (such as in wireless channels) it is preferred to do a re-computation. $\mathbf{H^{-1}}$ is known or stored from a previous channel estimation step. However, if in the present estimation interval, it is detected that there is a difference between current value of $\mathbf{H}$ and the previous value of $\mathbf{H\_pre}$ (that generated the inverse matrix $\mathbf{H^{-1}}$) an action is taken, since the difference simply represents the fact that some (at least one) entries of $\mathbf{H}$ have changed (for example a constant $\alpha$ is added to the ij-th element of $\mathbf{H}$).

Consider that $c = e_i$ and $d = \alpha e_j$, where $e_i$ and $e_j$ are the i-th and j-th unit columns. respectively. The matrix $cd^T$ has $\alpha$ in the ij-th element and zero's elsewhere so that the update $\mathbf{H} + cd^T = \mathbf{H} + \alpha e_i e_j^T$. The update is done as follows: $(\mathbf{H}+cd^T)^{-1} = \mathbf{H}^{-1}-\mathbf{H}^{-1}c(\mathbf{I}+d^T\mathbf{H}^{-1}c)^{-1}d^T\mathbf{H}^{-1}$, where $\mathbf{H}$ is invertible (which is the case in PLC channels). This produces a simple update algorithm given by $\mathbf{H}^{-1}-\alpha[\mathbf{H}^{-1}]_{*i}[\mathbf{H}^{-1}]_{j*}/\{1+\alpha[\mathbf{H}^{-1}]_{ji}\}$. This shows how $\mathbf{H}^{-1}$ changes when $\mathbf{H}$ is changed, and it provides a useful algorithm for updating $\mathbf{H}^{-1}$.

Depending on the channel estimation method (time or frequency domain) the channel matrix diagonalization through lattice reduction can be done in two ways: in the time domain - after the clipping 120 of the impulsive noise; and in the frequency domain - after the FFT 150 of $\mathbf{H_e}$. In both cases the calculated unimodular matrix $\mathbf{T}$ will have the same dimension due to the fact that the number of columns of the channel is not affected during the process, while the time domain scenario will have a smaller number of complex multiplications due to reduced channel matrix size.

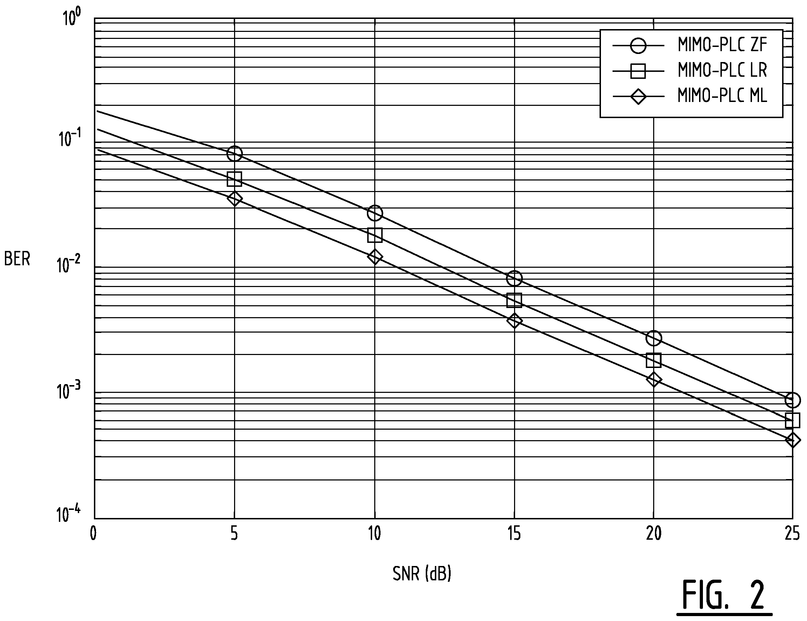

**Step 5:** Detection of signal is done by calculating the estimate of s as $\hat{\mathbf{s}} = \mathbf{T}\,\hat{\mathbf{y}} = \mathbf{s}+\mathbf{H^{-1}(N+I)}$. The bit error rate (BER) performance improvement is illustrated in Figure 2, where the performance with an embodiment of the proposed method is very close to the best achievable performance with a maximum likelihood (ML) detector.

Generally speaking the above particular embodiment illustrates the various aspects of the invention (which can be combined), such as (1) comparing the present channel matrix with a previous channel matric, and based on such comparison determining the course of action, (2) using of a previous equalizer or any other previously determined equalizer, (3) recomputing the equalizer and even determining the scope of such recomputation based on the comparison in that an entire or partial recalculation is performed.

Figure 1 illustrates schematically a block diagram of an exemplary embodiment of an equalizer determination system 20 (bottom part of figure 1) as applied in a data path 10 on a receiver part 30 (top right part of figure 1). The top left part 40 of figure 1 refers to the transmitter 50, the used telecommunication channel (preferably a power line communication) 60, and the mathematical representation 65 of assumed additive noise components. At the receiver side 30 a receiver 70 followed by an equalizer 80 is shown.

The bottom part of figure 1 shows the determining of the channel conditions, i.e. the channel transfer function, by using of a pilot signal P for reverse modulation 100, a conversion 110 into the time domain, e.g. using an IFFT, and optionally by using clipping 120 e.g. for noise reduction.

Figure 1 shows two variants of the invention. According to the first variant, a matrix diagonalization in the time domain 130 is performed, followed by a conversion from the time domain towards frequency domain 140. According to the second variant, a conversion from the frequency domain towards the time domain 150 is followed by matrix diagonalization 160 in the frequency domain. The choice whether or not to update the equalizer (being the inverse of the channel response but as diagonalized and a rotation matrix applied to it) is implemented by the switch 170 while the computation of the rotation matrix is shown in block 180.

A person of skill in the art would readily recognize that steps of various above-described methods can be performed by programmed computers and/or electronic devices with computation capabilities. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers and/or electronic devices with computation capabilities (where hard coded or soft coded) programmed to perform said steps of the above-described methods. The functions of the various elements shown in the figures, including any functional blocks may be provided through the use of dedicated hardware as well as hardware capable of executing software in association with appropriate software. Hardware and may include, without limitation, digital signal processor (DSP) hardware, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic.

It should be appreciated by those skilled in the art that any block diagrams herein represent conceptual views of illustrative circuitry embodying the principles of the invention. Similarly, it will be appreciated that any flow charts, flow diagrams, represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A method for determining an equalizer for use in a data path at a receiver side of a wired communication during a time period, the method comprising the steps of:

   determining channel conditions (400) of the wired communication during the time period;
   determining whether the determined channel conditions have changed compared to channel conditions during a previous time period;
   making a selection between at least a first and a second determination method to determine an equalizer based on the determined change of the channel conditions; and
   determining the equalizer (330) based on the selected method,
   wherein the selecting comprises: selecting the first determination method (310) if the change of the channel conditions compared with the previous time period is below a first threshold; and
   selecting the second determination method (300) if the change is above the first threshold; and
   wherein determining the equalizer comprises:

   selecting a previous equalizer determined during the previous time period if the first method is selected; and computing an equalizer (300) based on the determined channel conditions, if the second method is selected,
   wherein, if the second determination method is selected, the method further comprises selecting a first computation method, if the change of the channel conditions compared with this previous time period is below a second threshold, and selecting a second equalizer computation method, if the change of the channel conditions is above the second threshold;
   wherein the second computation method comprises computing a channel estimate based on a received signal (305), and performing a lattice reduction algorithm on said channel estimate (308); and
   wherein the first computation method comprises computing a channel estimate based on a received signal (305) without performing a lattice reduction algorithm (425).

2. The method of claim 1, wherein computing said channel estimate comprises performing any one of more of the following computations: performing a fast fourier transform (FFT), performing clipping, performing matrix diagonalization.

3. The method of claim 1 or 2, wherein the lattice reduction is performed either in the time domain or in the frequency domain.

4. The method of any of the previous claims, wherein said equalizer is an minimum mean square error MMSE or zero forcing ZF equalizer.

5. The method of any of the previous claims, wherein the change of the channel conditions is determined for one or more predetermined frequency bands of the communication.

6. The method of any of the previous claims, wherein the wired communication is a power line communication.

7. A method for determining data from signals received at the receiver of a wired communication, comprising the steps of: determining an equalizer in accordance with any one of the methods defined in the previous claims; and using the determined equalizer on the received signals, optionally further comprising descrambling the equalized received signals.

8. A computer program product comprising computer-executable instructions for performing the method of any one of the previous claims, when the program is run on a computer.

9. A receiver for use in a data path at a receiver side of a wired communication, the receiver comprising:

a channel conditions determining module configured for determining channel conditions (400) of the wired communication during a time period;
a comparator (320) configured for determining whether the determined channel conditions have changed compared to channel conditions during a previous time period;
a switching module (340) configured for making a selection between at least a first and a second determination method to determine an equalizer based on the determined change of the channel conditions; and
an equalizer determining module configured for performing the first or second determination method in accordance with a position of the switching module,
wherein the switching module is configured for selecting the first determination method (310) if the change of the channel conditions compared with the previous time period is below a first threshold; and selecting the second determination method (300) if the change is above the first threshold; and
wherein the equalizer determining module (310) is configured for selecting a previous equalizer determined during the previous time period if the first method is selected; and for computing an equalizer based on the determined channel conditions, if the second method is selected,
the receiver further comprising a computation selection module (425) configured to select, if the second determination method is selected, a first computation method (305), if the change of the channel conditions compared with the previous time period is below a second threshold, and to selecting a second equalizer computation method (305, 308), if the change of the channel conditions is above the second threshold;
wherein the second computation method comprises computing a channel estimate based on a received signal (305), and performing a lattice reduction algorithm on said channel estimate (308); and
wherein the first computation method comprises computing a channel estimate based on a received signal (305) without performing a lattice reduction algorithm (425).

10. A system for power line communication comprising the receiver of claim 9.

**Patentansprüche**

1. Verfahren zum Bestimmen eines Entzerrers für den Einsatz in einem Datenpfad auf einer Empfängerseite einer drahtgebundenen Kommunikation während eines Zeitraums, wobei das Verfahren die folgenden Schritte umfasst:

Bestimmen der Kanalbedingungen (400) der drahtgebundenen Kommunikation während des Zeitraums; Bestimmen, ob die bestimmten Kanalbedingungen sich geändert haben, verglichen mit den Kanalbedingungen während eines vorherigen Zeitraums;
Treffen einer Auswahl zwischen mindestens einem ersten und einem zweiten Bestimmungsverfahren, um einen Entzerrer auf der Basis der bestimmten Änderung der Kanalbedingungen zu bestimmen; und
Bestimmen des Entzerrers (330) auf der Basis des ausgewählten Verfahrens,
wobei das Auswählen Folgendes umfasst: Auswählen des ersten Bestimmungsverfahrens (310), falls die Änderung der Kanalbedingungen, verglichen mit dem vorherigen Zeitraum, unter einem ersten Schwellenwert liegt; und Auswählen des zweiten Bestimmungsverfahrens (300), falls die Änderung über dem ersten Schwellenwert liegt; und wobei das Bestimmen des Entzerrers Folgendes umfasst:

Auswählen eines vorherigen Entzerrers, der während eines vorherigen Zeitraums bestimmt wurde, falls das erste Verfahren ausgewählt wird; und Berechnen eines Entzerrers (300) auf der Basis der bestimmten Kanalbedingungen, falls das zweite Verfahren ausgewählt wird,
wobei, falls das zweite Bestimmungsverfahren ausgewählt wird, das Verfahren ferner das Auswählen eines ersten Berechnungsverfahrens umfasst, falls die Änderung der Kanalbedingungen, verglichen mit diesem vorherigen Zeitraum, unter einem zweiten Schwellenwert liegt, und Auswählen eines zweiten Entzerrer-Berechnungsverfahrens, falls die Änderung der Kanalbedingungen über dem zweiten Schwellenwert liegt;
wobei das zweite Berechnungsverfahren das Berechnen einer Kanalschätzung auf der Basis eines empfangenen Signals (305) und das Durchführen eines Gitterreduktionsalgorithmus an der Kanalschätzung (308) umfasst; und
wobei das erste Berechnungsverfahren das Berechnen einer Kanalschätzung auf der Basis eines empfangenen Signals (305) ohne Durchführen eines Gitterreduktionsalgorithmus (425) umfasst.

**2.** Verfahren nach Anspruch 1, wobei das Berechnen der Kanalschätzung das Durchführen einer oder mehrerer der folgenden Berechnungen umfasst: Durchführen einer schnellen Fourier-Transformation (FFT), Durchführen von Clipping, Durchführen von Matrix-Diagonalisierung.

**3.** Verfahren nach Anspruch 1 oder 2, wobei die Gitterreduktion entweder im Zeitbereich oder im Frequenzbereich durchgeführt wird.

**4.** Verfahren nach einem beliebigen der vorherigen Ansprüche, wobei der Entzerrer ein Entzerrer für minimalen mittleren quadratischen Fehler (MMSE) oder für Zero Forcing (ZF) ist.

**5.** Verfahren nach einem beliebigen der vorherigen Ansprüche, wobei die Änderung der Kanalbedingungen für ein oder mehrere vorbestimmte Frequenzbänder der Kommunikation bestimmt wird.

**6.** Verfahren nach einem beliebigen der vorherigen Ansprüche, wobei die drahtgebundene Kommunikation eine Stromleitungskommunikation ist.

**7.** Verfahren zum Bestimmen von Daten von Signalen, die am Empfänger einer drahtgebundenen Kommunikation empfangen wurden, das folgende Schritte umfasst: Bestimmen eines Entzerrers im Einklang mit einem beliebigen der in den vorherigen Ansprüchen definierten Verfahren; und Verwenden des bestimmten Entzerrers an den empfangenen Signalen, und das optional ferner das Entwürfeln der entzerrten empfangenen Signale umfasst.

**8.** Computerprogrammprodukt, das computerausführbar e Anweisungen zum Durchführen des Verfahrens nach einem beliebigen der vorherigen Ansprüche umfasst, wenn das Programm auf einem Computer ausgeführt wird.

**9.** Empfänger für Verwendung in einem Datenpfad auf einer Empfängerseite einer drahtgebundenen Kommunikation, wobei der Empfänger Folgendes umfasst:

ein Kanalbedingungs-Bestimmungsmodul, das dazu ausgelegt ist, Kanalbedingungen (400) der drahtgebundenen Kommunikation während eines Zeitraums zu bestimmen;
einen Komparator (320), der dazu ausgelegt ist zu bestimmen, ob die bestimmten Kanalbedingungen sich geändert haben, verglichen mit den Kanalbedingungen während eines vorherigen Zeitraums;
ein Schaltmodul (340), das dazu ausgelegt ist, eine Auswahl zwischen mindestens einem ersten und einem zweiten Bestimmungsverfahren zu treffen, um einen Entzerrer auf der Basis der bestimmten Änderung der Kanalbedingungen zu bestimmen; und
ein Entzerrer-Bestimmungsmodul, das dazu ausgelegt ist, das erste oder zweite Bestimmungsverfahren im Einklang mit einer Position des Schaltmoduls durchzuführen,
wobei das Schaltmodul dazu ausgelegt ist, das erste Bestimmungsverfahren (310) auszuwählen, falls die Änderung der Kanalbedingungen, verglichen mit dem vorherigen Zeitraum, unter einem ersten Schwellenwert liegt; und das zweite Bestimmungsverfahren (300) auszuwählen, falls die Änderung über dem ersten Schwellenwert liegt; und
wobei das Entzerrer-Bestimmungsmodul (310) dazu ausgelegt ist, einen vorherigen Entzerrer, der während eines vorherigen Zeitraums bestimmt wurde, auszuwählen, falls das erste Verfahren ausgewählt wird; und einen Entzerrer auf der Basis der bestimmten Kanalbedingungen zu berechnen, falls das zweite Verfahren ausgewählt wird,
der Empfänger ferner ein Berechnungs-Auswahlmodul (425) umfasst, das dazu ausgelegt ist, ein erstes Berechnungsverfahren (305) auszuwählen, falls das zweite Bestimmungsverfahren ausgewählt wird, falls die Änderung der Kanalbedingungen, verglichen mit dem vorherigen Zeitraum, unter einem zweiten Schwellenwert liegt, und ein zweites Entzerrer-Berechnungsverfahren (305, 308) auszuwählen, falls die Änderung der Kanalbedingungen über dem zweiten Schwellenwert liegt;
wobei das zweite Berechnungsverfahren das Berechnen einer Kanalschätzung auf der Basis eines empfangenen Signals (305) und das Durchführen eines Gitterreduktionsalgorithmus an der Kanalschätzung (308) umfasst; und
wobei das erste Berechnungsverfahren das Berechnen einer Kanalschätzung auf der Basis eines empfangenen Signals (305) ohne Durchführen eines Gitterreduktionsalgorithmus (425) umfasst.

**10.** System für Stromleitungskommunikation, das den Empfänger von Anspruch 9 umfasst.

**Revendications**

1. Procédé de détermination d'un égaliseur pour son utilisation dans un chemin de données au niveau d'un côté récepteur d'une communication filaire pendant une période, le procédé comprenant les étapes suivantes :

   la détermination de conditions de canal (400) de la communication filaire pendant la période ;
   le fait de déterminer si les conditions de canal déterminées ont changé en comparaison à des conditions de canal pendant une période précédente ;
   l'établissement d'une sélection entre au moins un premier et un second procédé de détermination pour déterminer un égaliseur d'après le changement déterminé des conditions de canal ; et
   la détermination de l'égaliseur (330) d'après le procédé sélectionné,
   dans lequel la sélection comprend : la sélection du premier procédé de détermination (310) si le changement des conditions de canal en comparaison à la période précédente est inférieur à un premier seuil ; et la sélection du second procédé de détermination (300) si le changement est supérieur au premier seuil ; et
   dans lequel la détermination de l'égaliseur comprend :

   la sélection d'un égaliseur précédent déterminé pendant la période précédente si le premier procédé est sélectionné ; et le calcul d'un égaliseur (300) d'après les conditions de canal déterminées, si le second procédé est sélectionné,
   dans lequel, si le second procédé de détermination est sélectionné, le procédé comprend en outre la sélection d'un premier procédé de calcul, si le changement des conditions de canal en comparaison à cette période précédente est inférieur à un second seuil, et la sélection d'un second procédé de calcul d'égaliseur, si le changement des conditions de canal est supérieur au second seuil ;
   dans lequel le second procédé de calcul comprend le calcul d'une estimation de canal d'après un signal reçu (305), et la réalisation d'un algorithme de réduction de réseau sur ladite estimation de canal (308) ; et
   dans lequel le premier procédé de calcul comprend le calcul d'une estimation de canal d'après un signal reçu (305) sans réaliser d'algorithme de réduction de réseau (425).

2. Procédé selon la revendication 1, dans lequel le calcul de ladite estimation de canal comprend la réalisation de l'un quelconque ou de plusieurs des calculs suivants : la réalisation d'une transformation rapide de Fourier (FFT), la réalisation d'un découpage, la réalisation d'une diagonalisation de matrice.

3. Procédé selon la revendication 1 ou 2, dans lequel la réduction de réseau est réalisée soit dans le domaine temporel soit dans le domaine fréquentiel.

4. Procédé selon l'une quelconque des revendications précédentes, dans lequel ledit égaliseur est un égaliseur à erreur quadratique moyenne minimale, MMSE ou à forçage à zéro ZF.

5. Procédé selon l'une quelconque des revendications précédentes, dans lequel le changement des conditions de canal est déterminé pour une ou plusieurs bandes de fréquence prédéterminées de la communication.

6. Procédé selon l'une quelconque des revendications précédentes, dans lequel la communication filaire est un courant porteur en ligne.

7. Procédé de détermination de données pour des signaux reçus au niveau du récepteur d'une communication filaire, comprenant les étapes suivantes : la détermination d'un égaliseur conformément à l'un quelconque des procédés définis dans les revendications précédentes ; et l'utilisation de l'égaliseur déterminé sur les signaux reçus, comprenant facultativement en outre le désembrouillage des signaux reçus égalisés.

8. Produit-programme d'ordinateur comprenant des instructions exécutables par ordinateur pour réaliser le procédé de l'une quelconque des revendications précédentes, lorsque le programme est exécuté sur un ordinateur.

9. Récepteur pour son utilisation dans un chemin de données au niveau d'un côté récepteur d'une communication filaire, le récepteur comprenant :

   un module de détermination de conditions de canal configuré pour déterminer des conditions de canal (400) de la communication filaire pendant une période ;
   un comparateur (320) configuré pour déterminer si les conditions de canal déterminées ont changé en comparaison à des conditions de canal pendant une période précédente ;

un module de commutation (340) configuré pour établir une sélection entre au moins un premier et un second procédé de détermination pour déterminer un égaliseur d'après le changement déterminé des conditions de canal ; et

un module de détermination d'égaliseur configuré pour réaliser le premier ou le second procédé de détermination conformément à une position du module de commutation,

dans lequel le module de commutation est configuré pour sélectionner le premier procédé de détermination (310) si le changement des conditions de canal en comparaison à la période précédente est inférieur à un premier seuil ; et pour sélectionner le second procédé de détermination (300) si le changement est supérieur au premier seuil ; et

dans lequel le module de détermination d'égaliseur (310) est configuré pour sélectionner un égaliseur précédent déterminé pendant la période précédente si le premier procédé est sélectionné ; et pour calculer un égaliseur d'après les conditions de canal déterminées, si le second procédé est sélectionné,

le récepteur comprenant en outre un module de sélection de calcul (425) configuré pour sélectionner, si le second procédé de détermination est sélectionné, un premier procédé de calcul (305), si le changement des conditions de canal en comparaison à la période précédente est inférieur à un second seuil, et pour sélectionner un second procédé de calcul d'égaliseur (305, 308), si le changement des conditions de canal est supérieur au second seuil ;

dans lequel le second procédé de calcul comprend le calcul d'une estimation de canal d'après un signal reçu (305), et la réalisation d'un algorithme de réduction de réseau sur ladite estimation de canal (308) ; et

dans lequel le premier procédé de calcul comprend le calcul d'une estimation de canal d'après un signal reçu (305) sans réaliser d'algorithme de réduction de réseau (425).

10. Système de courant porteur en ligne comprenant le récepteur selon la revendication 9.

**FIG. 1**

FIG. 2

EP 2 961 118 B1

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20140079110 A
- US 20070147489 A
- EP 1901505 A